# EUROPEAN PATENT SPECIFICATION

(11) **EP 0 388 420 B1**
(45) Date of publication and mention of the grant of the patent: **18.09.1996**
(21) Application number: 88909963.6
(22) Date of filing: 20.10.1988
(51) Int. Cl.: H05H 3/00, G21B 1/02, G21K 1/00

(54) **METHOD AND APPARATUS FOR FORMING A COHERENT BEAM OF BOSONS HAVING MASS**
VERFAHREN UND VORRICHTUNG ZUM FORMEN EINES KOHÄRENTEN BÜNDELS VON BOSONEN MIT MASSE
PROCEDE ET APPAREIL SERVANT A FORMER UN FAISCEAU COHERENT DE BOSONS AYANT UNE MASSE

(30) Priority: 23.10.1987 US 112842
(43) Date of publication of application: 26.09.1990
(73) Proprietor: APRICOT S.A., L-2240 Luxembourg (LU)
(72) Inventor: SHUI-YIN, Lo, Sherman Oaks, CA 91403 (US)
(74) Representative: Jackson, David Spence
(86) International application number: PCT/AU88/00411
(87) International publication number: WO 89/04112

(56) References cited:
- WO-A-87/00681
- DE-A- 3 409 478
- US-A- 3 723 703

## Description

This invention relates to a method of producing a beam of coherent bosons having mass, the method comprising:
providing an assembly of bosons having mass;
and directing a light beam of coherent photons onto the assembly.

The invention also relates to apparatus which can be used to carry out the method.

It is well-known that when intense light from a laser is focused on matter, atoms will absorb energy from photons to become ionized and form a hot plasma. Many works in this field are summarized in the book Plasma and Laser Light, by T.D. Hughes, John Wiley & sons (1976).

It is also known that if the light from a laser is powerful enough, say with an intensity greater than 10¹² watt/cm², the atoms will be ionized by the light. Furthermore, the electrons coming out from the atoms will absorb more photons. This is referred to in literature as ATO (= Above Threshold Ionization). See for example P. Kruit et al, Phys. Rev A 15, 1604 (1977): and R. R. Freeman et al. Phys. Rev Let 59 1092 (1987).

The following publications relate to laser cooling for producing an ion beam:

"Possibility of Observing a Condensed Crystalline State in Laser-Cooled Beams of Atomic Ions", EUROPHYSICS LETTERS, J.p. Schiffer and O. Poulsen, Europhys. Lett., 1 (2), pp. 55-59 (1986).

"Could There be an Ordered Condensed State in Beams of Fully Stripped Heavy Ions?", J.P. Schiffer and P. Kienle, Z. Phys. A. Atoms and nuclei 321, 181 (1985).

The production of a jet of liquid helium is described in an article by J.F. Allen and H. Jones in Nature, Vol. 141, 1938, beginning at page 243. A U-tube is packed with emery powder and light is directed onto the U-tube when it is submerged in a body of liquid helium which is maintained in a condition in which the liquid is helium II. The arms of the U-tube are held upright and one has an extension which is empty and extends above the surface of the liquid helium. When light is directed onto the U-tube, which also contain liquid helium II, a fountain of liquid helium is projected from the extension. This effect is, however, the result of direct transformation of the heat energy absorbed by the emery powder into kinetic energy of the liquid helium II.

In International patent application No. PCT/AU86/00212, publication no. WO 87/00681, there is described a method of the kind defined hereinbefore at the beginning in which the assembly of bosons having mass is a beam of deuterons created in a vacuum tube by an ion source and trapped in a circulatory path by magnets. A laser projects its beam of coherent light into the vacuum tube along a line which corresponds to part of the deuteron beam path. The laser beam has the effect of rendering the deuteron beam coherent.

According to one aspect of the present invention a method of the kind defined hereinbefore at the beginning is characterised in that the step of providing the assembly of bosons having mass comprises:
providing a body of matter containing bosons having mass; and
maintaining the body in conditions under which at least some of the bosons having mass are in their lowest energy level states;
and in that the step of directing the beam of coherent photons onto the assembly comprising so directing the light beam of coherent photons onto the body as to cause projection of bosons having mass from the body.

According to another aspect of the invention there is provided apparatus for producing a beam of coherent bosons having mass, the apparatus comprising:
means for retaining an assembly of bosons having mass; and
means for directing a light beam of coherent photons onto the assembly, characterised in that the retaining means is adapted to retain the assembly in the form of dense matter having a density temperature relationship resulting in some bosons within said matter staying at their lowest energy levels.

The preferred embodiment of the invention makes use of that fact that if the particles in the matter are at a density n sufficiently high to be larger than a critical density n_{c} and the temperature lower than a critical temperature T_{c}.${\text{n > n}}_{\text{c}}$${\text{T < T}}_{\text{c}}$ then when intense light from a laser shines on them, bosons will be released upon absorption of the photons, and become a beam of coherent bosons. These bosons may be neutral atoms, ionized atoms, molecules, or nuclei. The mechanism is induced scattering, as outlined in International patent application No. PCT/AU86/00212, publication no. WO-A-87/00681.

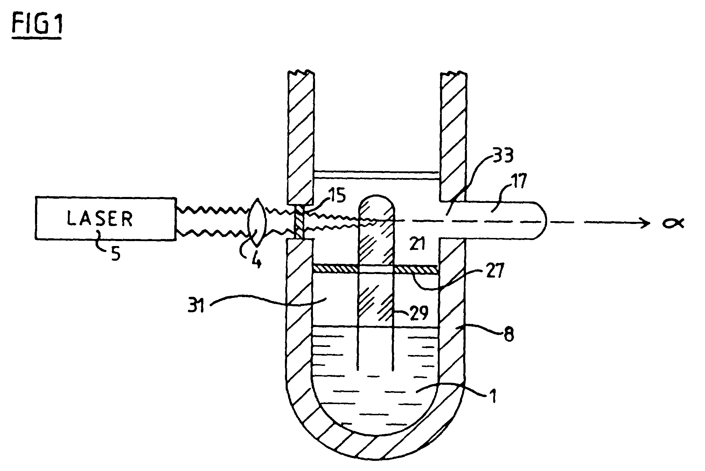

The invention is further described by way of example only with reference to the accompanying drawing, the single figure of which is a diagram of an apparatus constructed in accordance with the invention.

### DETAILED DESCRIPTION

When a system of bosons is under thermal equilibrium, the distribution of their energy obeys Bose-Einstein statistics. If the density of the bosons increases, or the temperature of the bosons decreases, a critical condition is reached and some of the bosons will share the same ground state at the lowest energy and become coherent. This is called Bose-Einstein condensation, and the temperature at which it occurs is the critical temperature. A more thorough discussion concerning Bose-Einstein condensation is given in, for example, the book "Statistical Physics" by L.D. Landau and E.M. Lifshitz, Pergamon Press, 1958, at page 168. Let the critical density be n_{c} and the critical temperature T_{c}. By "density is meant the number of bosons per cm³. We have: 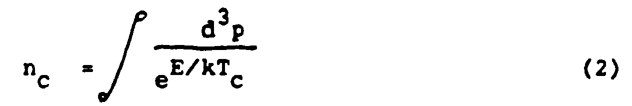 where p, E are respectively the momentum and energy of the bosons, T_{c} is the critical temperature, and k is the Boltzman constant. Upon evaluation of the integral, they are related by${\text{n}}_{\text{c}} {\text{= (2mkT}}_{\text{c}} {\text{)}}^{\text{3/2}} \text{ζ (3/2)}$ where ζ (3/2)=2.612 is the Riemann function and m is the mass of the charged boson. To evaluate the numerical values, one can assume a temperature of 10°K and a boson of the order of the mass of the proton, m 1 GeV, and the critical density n_{c} is 10²⁴/cm³. This is at least an order of magnitude higher than the density in molecules per cm³ of most normal matter. Hence, almost all normal matter never reaches this critical condition at this low temperature. Most matter also becomes solid at 10°K, and its density cannot decrease further. The only way to reach the critical temperature or density condition (3) is by lowering the temperature even further.

For liquid helium, the critical temperature is reached at T_{C} = 2.174°K, at normal atmospheric pressure. The corresponding critical density is of the order of 10²²/cm³. Once the critical temperature is reached, some of the helium atoms (He⁴), which are bosons, in the liquid state will become coherent and form a superfluid component in the liquid helium. Focusing an intense light from a laser on the superfluid will cause a coherent boson beam to be formed.

Consider the physical process behind the interaction of light with a helium atom. If there is sufficient intensity of light, the helium atom will absorb many photons to become ionized. ${\text{n}}_{\text{γ}} \text{γ + He → α +} \overline{\text{e}} \text{+} \overline{\text{e}}$Energy requirement dictates that${\text{n}}_{\text{γ}} {\text{γE ≥ E}}_{\text{He}}$ where E is the energy of each individual photon, and E_{He} is the ionization energy of the helium (=27.2eV). If the energy of the photon in the laser is E **=** lev, it requires at least the absorption of 28 photons by an individual helium atom to become ionized. According to quantum electrodynamics the probability of absorbing each additional photon is down by α∼¹/₁₃₇ so that the chance of ionization from ordinary light is extremely small. It requires very intense light from a laser to ionize a helium gas. Once the helium is ionised, the absorption of additional photons is generally done by electrons, and the electrons, and the ionized helium atoms, will become hot.

However, if the helium atoms are coherent as they are in a superfluid liquid helium state, then there is collective interaction among the coherent photons and coherent helium atoms. Then we may have a coherent neutral helium beam in the final state ${\text{n}}_{\text{γ}} {\text{γ + n}}_{\text{o}} {\text{H}}_{\text{e}} {\text{→ n}}_{\text{γ}} {\text{γ + n}}_{\text{o}} {\text{H}}_{\text{e}}$if the energy of photons is not used up for ionization.

On the other hand, the helium may become ionized and separate into a coherent beam of particles and electrons. ${\text{n}}_{\text{γ}} {\text{γ + n}}_{\text{O}} {\text{H}}_{\text{e}} {\text{→ n}}_{\text{i}} {\text{α + 2n}}_{\text{i}} \text{(} \overline{\text{e}} \text{+} \overline{\text{e}} \text{)}$where n_{γ} is the number of coherent photons, nₒ is the number of coherent helium atoms, and nᵢ is the number of coherent α- particles (nᵢ = nₒ). As discussed in patent application PCT/AU86/00212, in the scattering among coherent particles, there is a factor m! increase in probability whenever there is m coherent bosons. So the probability that (6) and (7) occurs instead of (4) has an additional factor like (n_{γ}!nₒ!nᵢ!). For a 1 Joule light with a pulse of 10 ns from a single mode Nd-YAG laser or an Eximer laser, there are n_{γ}= 10¹⁹ photons. For superfluid liquid helium, there are about 10²² helium atoms in 1 cm³. For a liquid film of the size 10 mm x 10 mm x 1mm, there are nₒ ≈ 10²¹ atoms. So, for the scattering of coherent light with superfluid helium, the probability of producing coherent bosons is practically 1, and the scattering can be regarded as a semiclassical scattering.

The critical condition for creation of coherent bosons is discussed in the aforementioned patent application PCT/AU86/00212. More particularly, the ratio "r" is therein defined as:$\text{r =} \frac{{\text{W}}_{\text{c}}}{{\text{W}}_{\text{o}}}$ where
- W_{c} =: rate of coherent scattering, and
- Wₒ =: rate of normal scattering

For production of coherent bosons, the critical condition is r≥1. That is to say, coherent bosons will be produced if the rate of coherent scattering equals or exceeds the rate of normal scattering.

In the context of the system described in application PCT/AU86/00212, the ratio "r" is there expressed as:$\text{r =} \frac{{\text{(n}}_{\text{1}} {\text{+ n}}_{\text{2}} \text{)!}}{{\text{n}}_{\text{2}} \text{!}} \text{η}$ where
- n₁ =: number of photons,
- n₂ =: number of coherent particles, and
- η =: phase space factor.

In the present context, it is convenient to consider the critical condition as being described by the equation for process (6)${\text{W}}_{\text{c}} {\text{= Z}}^{\text{nγ}} {\text{W}}_{\text{l}} \text{,}$ where
W_{c} is as above defined,
W₁ is the rate of normal scattering, and 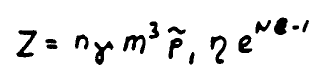 where
m = the number of coherent helium atom,
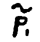 = possibility of normal photo scattering,
η = $\frac{\text{1}}{\text{number of final states}}$
e is the exponential number
N = the number of photons per helium atom, and
ε = $\frac{\text{ω}}{\text{M}}$, where
ω = frequency of photons, and
M = mass of helium atom

In this case the critical condition for production of coherent bosons is:$\text{Z ≥ 1.}$

For n_{γ}=10¹⁹, m=10¹⁰∼10¹⁷,
N=10²∼10⁷, ε=2-7x10 ⁻¹⁰, Nε is very small and can be neglected. The critical condition becomes

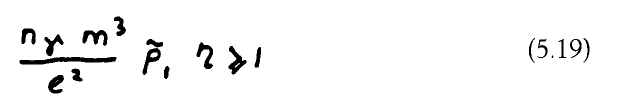

Insight into this critical condition may be gained by considering the case where m=n_{γ}, the number of helium atoms is equal to the number of photons and each helium interact with only one photon. Then eq. (5.19) reduces to 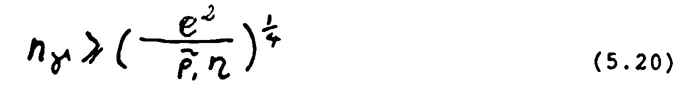 where 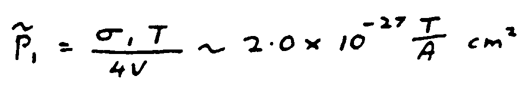 $\text{η =} \frac{\text{π T}}{{\text{ω}}^{\text{2}} \text{A}} {\text{= 1.90 × 10}}^{\text{-10}} \frac{\text{T}}{\text{V}} {\text{cm}}^{\text{2}}$ and the γ-He scattering cross section σ₁ is given by Rayleigh theory to be${\text{σ}}_{\text{1}} \text{=} \frac{\text{8π}}{\text{3}} {\left(\frac{{\text{e}}^{\text{2}}}{{\text{m}}_{\text{e}} {\text{c}}^{\text{2}}}\right)}^{2} {\left(\frac{\text{ω}}{{\text{ω}}_{\text{o}}}\right)}^{\text{4}}$ at wave length λ=0.488 µm, or
ω=2.54eV;(ωₒ=13.6eV). Condition (5.20) becomes${\text{n}}_{\text{γ}} {\text{≥ 1.23 × 10}}^{\text{10}} {\left(\frac{\text{V}}{\text{T}}\right)}^{\frac{\text{1}}{\text{2}}}$ where the volume V is the square root of the product of normalization volume for helium V_{He} and the volume of laser pulse V_{γ}$\text{V =} \sqrt{{\text{V}}_{\text{He}} {\text{V}}_{\text{γ}}}$ which are given by the experimental condition.

The interaction time T cannot be determined exactly by the above but the smallest value T can take is the period of the light wave. For V∼10²cm, T∼1µm, the critical condition is n_{γ}≥10¹³. If the laser pulse has energy µJ or above, the critical condition will be satisfied.

Generally, while it is not necessary for existence of the critical condition Z≥1 that the aforementioned critical temperature T_{c} or critical density n_{c} prevail it is preferable that such be the case. Particulaly, as above described, for superfluid helium the described Nd-YAG or Eximer lasers provide sufficient energy (n_{γ} = 10¹⁹ photons) to ensure effective coherent boson production, the superfluid helium being at the critical temperature. In the case where the bosons upon which the coherent light is incident are at a temperature exceeding the critical temperature, the critical condition for coherent boson production may still be met, however, by increasing the number of the incident coherent photons.

The requirements in this respect are, considering the case of production of coherent helium atoms only, ascertainable from the following equation: 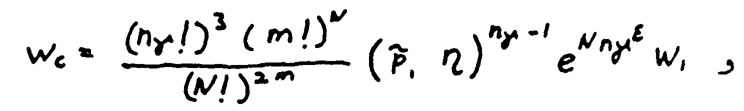 where the terms thereof have the meanings described above.

Because of momentum conservation, the produced coherent boson beam will tend to travel along the direction of an incident photon beam. If the average number of photons absorbed by helium is large, the final state will contain coherent Hₑ particles. For the above example n_{γ}=10¹⁹, nₒ 10¹², and E_{γ} = leV, the energy of individual Hₑ particles in the final coherent beam is given by (n_{γ} /nₒ) E_{γ}∼10⁷eV.

So, a beam of coherent Hₑ particles with energy above MeV is formed. For a 10MeV Hₑ particle, the speed is 2 x 10¹⁰ cm/sec. The time interval for it to pass through the thickness of the plasma of 1µm is 5 x 10⁻¹⁵ sec. The power contained in the coherent α-beam is:$\text{P =} \frac{\text{IJ}}{{\text{5 × 10}}^{\text{-15}}} {\text{= 2 × 10}}^{\text{14}} \text{Watt}$ This is a very substantial concentration of power. Such a powerful beam has many applications including to initiate nuclear fusion in a deuterium pellet under inertia confinement configuration.

The energy of individual coherent bosons produced in the final beam can be adjusted by changing the number of helium atoms of the superfluid component of the liquid helium. The higher the temperature, the lower the component of superfluid, and the higher the energy of the resultant coherent energy beam.

### EXAMPLE APPARATUS

The apparatus is illustrated in the drawing as consisting of three major components:
(1) A pulsed laser 5 and its accessories. It may for example be a pulsed Excimer laser like the HE-400-5M or TE-290 series manufactured by Lumonic, 3629 Vista Mercado, Camarillo, CA 93010 USA. Or, it may be a pulsed Nd-YAG laser such as the DCR-3G(1) manufactured by Spectra-Physics, 1250 West Middlefield Road, P.O. Box 7013, Mountain View, CA 94039-7013, USA.
   The laser light is focused into a very small spot on a liquid helium film by a lens 4.
(2) Cryostat - A cryostat that can hold liquid helium down to temperature of 1°K or below. Such a cryostat is described in the book by R. J. Donnelly entitled Experimental Superfluidity published by The University of Chicago Press (1967), and can be ordered from Cryo Industries of America, Inc., 24 Keewaydi Drive, Salem NH 03079, USA. Only the internal part of 8 of the cryostat is shown in the drawing, this forming a vacuum chamber 31.
(3) A vacuum chamber 31 inside the cryostat. At the left-handed side in the figure, a window 15 is provided open to allow focussed light from the laser to enter the cryostat. At the right-hand side in the figure, a vacuum transport system 17 is provided leading out *of* the cryostat, where the coherent boson beam is extracted. In the middle of the chamber is an inverted U-shaped bent wire 29 within which a liquid helium film 21 is formed by, for example, capillary action from a resevoir 23 of liquid helium in the vacuum chamber 31.

The laser emits pulsed light which enters the cryostat through the window slit and shines on the liquid helium film at 1°K∼2°K. The helium liquid, in this case superfluid helium liquid, will wet the bent wire from a pool of liquid helium in a reservoir 23 below the wire and within the cryostat 8. To avoid heating the liquid helium directly from laser light, it is advisable to provide insulation 27 between the vacuum chamber that holds the liquid helium film and the liquid helium reservoir below. Further, some means for locally heating the periphery of the interior wall of the vaccuum chamber may be provided at the location between the surface of the liquid helium and the insulation 27, sufficient to slightly heat the wall at that location above the temperature for formation of superfluid helium liquid at that location. On the other side of the vacuum chamber a port 33 leads to the transport system 17. The laser light falls on the liquid helium film and this gives rise to a coherent He particle beam which exits via port 33.

Besides using liquid helium as a target it is also possible to use other materials at temperature below 2°K. The critical temperature will differ from material to material, calculable from the density of material by equation (4). Such material as deuterium will in general be solid at such low temperature. The deuterium is then in a quantum solid state. Because it is solid and not liquid, it does not become superfluid. But, under scattering from coherent light, the coherent deuterium in a quantum solid state will behave similarly as in the case of superfluid helium and become ionized and form a coherent deuterium beam. It is also possible then to generate other boson beams in similar fashion.

The invention may be used for producing energy by nuclear fusion processes involving directing one or more coherent beams of coherent bosons having mass to material capable of undergoing nuclear fusion such as deuterium and/or tritium. In this application the beam formed by the invention may, if necessary, be accelerated by use of conventional accelerators before being so directed. The material against which the beam is directed may, for example, be in the form of pellets, as known, and several beams may be directed simultaneously from different directions.

## Claims

1. A method of producing a beam of coherent bosons having mass, the method comprising:
providing an assembly (21) of bosons having mass; and
directing a light beam of coherent photons onto the assembly (21), characterised in that the step of providing the assembly (21) of bosons having mass comprises:
providing a body (21) of matter containing bosons having mass; and
maintaining the body (21) in conditions under which at least some of the bosons having mass are in their lowest energy level states;
and in that the step of directing the beam of coherent photons onto the assembly comprising so directing the light beam of coherent photons onto the body (21) as to cause projection of bosons having mass from the body (21).

2. A method according to claim 1, characterised in that the body (21) has a density greater than a critical density defined by the conditions under which at least some of the bosons having mass are in the lowest energy levels.

3. A method according to claim 2, characterised in that the body (21) is of solid deuterium at a low temperature.

4. A method according to claim 2, characterised in that the critical density is of the order of 10²²/cm³.

5. A method according to claim 1, characterised in that the bosons at their lowest energy levels in the body (21) share the same ground state.

6. A method according to claim 1, characterised in that the bosons at their lowest energy levels in the body (21) exhibit Bose-Einstein condensation.

7. Apparatus for producing a beam of coherent bosons having mass, the apparatus comprising:
means (8,29) for retaining an assembly (21) of bosons having mass; and
means (5,4) for directing a light beam of coherent photons onto the assembly (21), characterised in that the retaining means (8,29) is adapted to retain the assembly (21) in the form of dense matter having a density temperature relationship resulting in some bosons within said matter staying at their lowest energy levels.

8. Apparatus according to claim 7, characterised in that the means for retaining dense matter comprises means (8) for retaining liquid helium.

9. Apparatus according to claim 8, characterised by means for cooling the helium to very low temperatures.

10. Apparatus according to claim 7, characterised in that the dense matter is such that some bosons therein share the same ground state.

11. Apparatus according to claim 7, characterised in that the dense matter is such that some bosons therein exhibit Bose-Einstein condensation.

12. Apparatus according to claim 7 or 10 or 11, characterised by means for directing the coherent boson beam having mass to material which undergoes nuclear fusion when irradiated by said coherent boson beam.

13. A method according to claim 1, characterised in that the body (21) of matter is located within a cryostat (8) having a window (15) therein; and the step of directing a light beam of coherent photons comprises focusing a laser beam through said window (15) onto a very small area of said matter; and by the step of extracting said coherent beam of bosons formed by said interaction of said laser light and said matter from said cryostat (8).

14. A method according to claim 13, characterised by the step of placing said matter in a vacuum chamber (31) within said cryostat (8).

15. A method according to claim 14, characterised by the step of connecting a reservoir (1) of matter containing bosons to the means (29) for providing matter having bosons, said reservoir (1) being insulated (27) from said laser beam to avoid heating by said laser beam.

16. A method according to claim 14, characterised by the step of pulsing said laser beam on said matter (21).

17. A method according to claim 13, characterised that the means for extracting said beam of coherent bosons is a vacuum transport system (17) connected to said cryostat (8).

18. A method according to claim 13, characterised in that the bosons in the lowest energy levels share the same ground state.

19. A method according to claim 13, characterised in that the bosons in the lowest energy levels exhibit Bose-Einstein condensation.

20. A method according to claim 1, characterised in that, by the mechanism of induced scattering, the incident light causes said bosons in the lowest energy levels to be rendered into a coherent state to form said coherent boson beam by a process comprising:
A + B → A + B
wherein A is a first body and B is a second body thereby yielding a two body to two body process without bringing any of the atoms involved therewith into a excited state.

21. A method according to claim 1, characterised in that the said assembly is an assembly of neutral atoms, the step of maintaining the body (21) comprising exposing the body (21) to temperature and density conditions such that some of the bosons with mass share the same quantum state and are at a density which is coherent;
and the step of directing a light beam of coherent photons comprising shining the beam of coherent photons on said some bosons to provide the coherent boson beam having mass.

22. A method according to claim 21, characterised in that said matter is liquid helium having superfluid properties and the boson beam is a beam of alpha-particles.

23. A method according to claim 21, characterised in that the matter is liquid and there is a critical density of the matter which is of the order of 10²²/cm³.

24. A method according to claim 21, characterised in that the matter is liquid helium having superfluid properties and the boson beam is a beam of helium.

25. A method according to claim 1, characterised in that the said assembly is an assembly of neutral atoms, and said body is exposed to temperature and density conditions such that some of the bosons of said matter share close quantum states; and the step of directing a light beam of coherent photons comprises shining the beam of coherent photons on said some bosons to provide to produce the coherent boson beam having mass.

26. A method according to claim 25, characterised in that the matter is deuterium, the deuterium is solid, and has a critical density.

27. A method according to claim 1, characterised in that
(i) the matter is helium;
(ii) the step of maintaining comprises isolating the body (21) in a controlled environment (8),
and creating a density (n_{c}) and temperature (T_{c}) relationship for at least some of the helium bosons in accordance with${\text{n}}_{\text{c}} \text{= ∫} \frac{{\text{d}}^{\text{3}} \text{p}}{{\text{e}}^{\text{E/kTc}}}$
where p = momentum
E = energy
k = Boltzman's constant
whereby n_{c} = (2mkT_{c})^{3/2} ζ (3/2),
where ζ (3/2) = 2.612 which is the Riemann function,
and m = mass of the boson; and
(iii) the directing of a light beam of coherent photons comprises focusing a coherent light beam of sufficient intensity on the body (21) to cause emission of the coherent beam of bosons with mass along the direction of the incident light beam.

28. A method according to claim 27, characterised in that the temperature surrounding said body (21) of helium bosons is decreased until n_{c} is achieved.

29. A method according to claim 27, characterised in that the said light beam is a laser beam.

30. A method according to claim 27, characterised in that n_{c} is the critical density and T_{c} is the critical temperature for Bose-Einstein condensation.

31. A method according to claim 27, characterised in that the bosons in the lowest energy levels share the same ground state.

32. A method according to claim 27, characterised in that the bosons in the lowest energy levels exhibit Bose-Einstein condensation.

33. A method according to claim 27, characterised in that m = the mass of a charged boson.

## Patentansprüche

1. Verfahren zur Erzeugung eines Strahls kohärenter Bosonen mit Masse, enthaltend folgende Schritte:
Bereitstellen einer Ansammlung (21) von Bosonen mit Masse; und
Hinlenken eines Lichtstrahls kohärenter Photonen auf die Ansammlung (21);
dadurch gekennzeichnet, daß der Schritt des Bereitstellens der Ansammlung (21) von Bosonen mit Masse folgendes umfaßt:
Bereitstellen eines Körpers (21) aus Materie, welche Bosonen mit Masse enthält; und
Halten des Körpers (21) unter Bedingungen, unter denen zumindest einige der Bosonen mit Masse sich in ihren untersten Energieniveaus befinden;
und daß der Schritt des Hinlenkens des Strahls kohärenter Photonen auf die Ansammlung vorsieht, den Lichtstrahl kohärenter Photonen so auf den Körper (21) hinzulenken, daß das Ausstoßen von Bosonen mit Masse aus dem Körper (21) bewirkt wird.

2. Verfahren nach Anspruch 1, dadurch gekennzeichnet, daß der Körper (21) eine Dichte größer als eine kritische Dichte hat, die durch die Bedingungen definiert ist, unter welchen zumindest einige der Bosonen mit Masse sich auf ihren niedrigsten Energieniveaus befinden.

3. Verfahren nach Anspruch 2, dadurch gekennzeichnet, daß der Körper (21) aus festem Deuterium bei niedriger Temperatur ist.

4. Verfahren nach Anspruch 2, dadurch gekennzeichnet, daß die kritische Dichte in der Größenordnung von 10²²/cm³ beträgt.

5. Verfahren nach Anspruch 1, dadurch gekennzeichnet, daß die Bosonen auf ihren niedrigsten Energieniveaus in dem Körper (21) denselben Grundzustand teilen.

6. Verfahren nach Anspruch 1, dadurch gekennzeichnet, daß die Bosonen auf ihren niedrigsten Energieniveaus in dem Körper (21) eine Bose-Einstein-Kondensation zeigen.

7. Einrichtung zur Erzeugung eines Strahls kohärenter Bosonen mit Masse, enthaltend:
Mittel (8, 29) zur Aufnahme einer Ansammlung (21) von Bosonen mit Masse; und
Mittel (5, 4) zum Hinlenken eines Lichtstrahls kohärenter Photonen auf die Ansammlung (21),
dadurch gekennzeichnet, daß die Aufnahmemittel (8, 29) so ausgebildet sind, daß sie die Ansammlung (21) in der Form dichter Materie mit einer Beziehung von Dichte und Temperatur aufnehmen, die darin resultiert, daß einige Bosonen innerhalb der Materie auf ihren niedrigsten Energieniveaus bleiben.

8. Einrichtung nach Anspruch 7, dadurch gekennzeichnet, daß die Mittel zur Aufnahme der dichten Materie Mittel (8) zur Aufnahme flüssigen Heliums enthalten.

9. Einrichtung nach Anspruch 8, gekennzeichnet durch Mittel zur Kühlung des Heliums auf sehr tiefe Temperaturen.

10. Einrichtung nach Anspruch 7, dadurch gekennzeichnet, daß die dichte Materie solcher Art ist, daß einige Bosonen darin denselben Grundzustand teilen.

11. Einrichtung nach Anspruch 7, dadurch gekennzeichnet, daß die dichte Materie solcher Art ist, daß einige Bosonen darin eine Bose-Einstein-Kondensation zeigen.

12. Einrichtung nach Anspruch 7 oder 10 oder 11, gekennzeichnet durch Mittel zum Hinlenken des kohärenten Bosonenstrahls mit Masse auf Material, welches bei Bestrahlung durch den genannten kohärenten Bosonenstrahl eine Kernfusion erfährt.

13. Verfahren nach Anspruch 1, dadurch gekennzeichnet, daß der Körper (21) aus Materie innerhalb eines Cryostates (8) angeordnet ist, in welchem ein Fenster (15) vorgesehen ist, und daß der Schritt des Hinlenkens eines Lichtstrahls kohärenter Photonen das Fokussieren eines Laserstrahls durch das genannte Fenster (15) hindurch auf eine sehr kleine Fläche auf der genannten Materie umfaßt, und ferner gekennzeichnet durch den Schritt des Herausleitens des genannten kohärenten Strahls von Bosonen, der durch die Wechselwirkung des Laserlichtes und der Materie gebildet wird, aus dem Cryostat (8).

14. Verfahren nach Anspruch 13, gekennzeichnet durch den Schritt des Anordnens der genannten Materie in einer Vakuumkammer (31) innerhalb des genannten Cryostats (8).

15. Verfahren nach Anspruch 14, gekennzeichnet durch den Schritt des Verbindens eines Reservoirs (1) von Materie, die Bosonen enthält, mit den Mitteln (29) zur Bereitstellung von Materie mit Bosonen, wobei das Reservoir (21) gegenüber dem Laserstrahl isoliert (27) ist, um eine Erhitzung durch den Laserstrahl zu vermeiden.

16. Verfahren nach Anspruch 14, gekennzeichnet durch den Schritt des Pulsierenlassens des Laserstrahls auf der Materie (21).

17. Verfahren nach Anspruch 13, dadurch gekennzeichnet, daß die Mittel zum Herausleiten des genannten Strahls kohärenter Bosonen in einem Vakuum-Transportsystem (17) bestehen, das mit dem Cryostat (8) verbunden ist.

18. Verfahren nach Anspruch 13, dadurch gekennzeichnet, daß die Bosonen auf den niedrigsten Energieniveaus denselben Grundzustand teilen.

19. Verfahren nach Anspruch 13, dadurch gekennzeichnet, daß die Bosonen auf den niedrigsten Energieniveaus eine Bose-Einstein-Kondensation zeigen.

20. Verfahren nach Anspruch 1, dadurch gekennzeichnet, daß durch den Mechanismus einer induzierten Streuung das einfallende Licht die genannten Bosonen auf den niedrigsten Energieniveaus dazu veranlaßt, in einen kohärenten Zustand zu gehen, um das genannte kohärente Bosonen-Strahlenbündel durch folgenden Prozeß zu bilden:
A + B → A + B, worin A ein erster Körper und B ein zweiter Körper ist, so daß sich ein Zwei-Körper- zu Zwei-Körper-Prozeß ergibt, ohne daß irgendwelche der darin involvierten Atome in einen angeregten Zustand gebracht werden.

21. Verfahren nach Anspruch 1, dadurch gekennzeichnet, daß die genannte Ansammlung eine Ansammlung neutraler Atome ist, daß der Schritt des Haltens des Körpers (21) das Aussetzen des Körpers (21) gegenüber Temperatur- und Dichtebedingungen derart umfaßt, daß einige der Bosonen mit Masse denselben Quantenzustand teilen und eine Dichte haben, die kohärent ist; und daß der Schritt des Hinlenkens eines Lichtstrahls kohärenter Photonen das Aufstrahlen des Strahls kohärenter Photonen auf die genannten einigen Bosonen umfaßt, um den kohärenten Bosonenstrahl mit Masse zu erzeugen.

22. Verfahren nach Anspruch 21, dadurch gekennzeichnet, daß die genannte Materie flüssiges Helium mit superfluidischen Eigenschaften ist und daß der Bosonenstrahl ein Strahl von Alpha-Partikeln ist.

23. Verfahren nach Anspruch 21, dadurch gekennzeichnet, daß die Materie flüssig ist und daß eine kritische Dichte der Materie vorherrscht, welche in der Größenordnung von 10²²/cm³ beträgt.

24. Verfahren nach Anspruch 21, dadurch gekennzeichnet, daß die Materie flüssiges Helium mit superfluidischen Eigenschaften ist und daß der Bosonenstrahl ein Strahl von Helium ist.

25. Verfahren nach Anspruch 1, dadurch gekennzeichnet, daß die genannte Ansammlung eine Ansammlung neutraler Atome ist und der Körper Temperatur- und Dichte-Bedingungen derart ausgesetzt ist, daß einige der Bosonen der Materie nahe beieinanderliegende Quantenzustände teilen; und daß der Schritt des Hinlenkens eines Lichtstrahls kohärenter Photonen das Aufstrahlen des Strahls kohärenter Photonen auf die genannten einigen Bosonen umfaßt, um den kohärenten Bosonenstrahl mit Masse zu erzeugen.

26. Verfahren nach Anspruch 25, dadurch gekennzeichnet, daß die Materie Deuterium ist, daß das Deuterium fest ist und eine kritische Dichte hat.

27. Verfahren nach Anspruch 1, dadurch gekennzeichnet, daß
(i) die Materie Helium ist;
(ii) der Schritt des Haltens des Körpers das Isolieren des Körpers (21) in einer gesteuerten Umgebung (8) und das Erzeugen einer Dichtebeziehung (n_{c}) und einer Temperaturbeziehung (T_{c}) für mindestens einige der Heliumbosonen umfaßt, entsprechend folgender Beziehung:$\text{nc = ∫} \frac{{\text{d}}^{\text{3}} \text{p}}{{\text{e}}^{\text{EkTc}}} \text{,}$
worin p = Moment
E = Energie
k = Boltzman-Konstante
wobei nc = (2mkT_{c})^{3/2} ζ (3/2),
worin ζ (3/2) = 2,612, welches die Riemannfunktion ist,
und m = Masse des Boson; und
(iii) das Hinlenken eines Lichtstrahls kohärenter Photonen das Fokussieren eines kohärenten Lichtstrahls ausreichender Intensität auf den Körper (21) umfaßt, um eine Emission des kohärenten Strahls von Bosonen mit Masse längs der Richtung des einfallenden Lichtstrahls zu veranlassen.

28. Verfahren nach Anspruch 27, dadurch gekennzeichnet, daß die Temperatur in der Umgebung des Körpers (21) aus Heliumbosonen erniedrigt wird, bis n_{c} erreicht ist.

29. Verfahren nach Anspruch 27, dadurch gekennzeichnet, daß der genannte Lichtstrahl ein Laserstrahl ist.

30. Verfahren nach Anspruch 27, dadurch gekennzeichnet, daß n_{c} die kritische Dichte und T_{c} die kritische Temperatur für die Bose-Einstein-Kondensation ist.

31. Verfahren nach Anspruch 27, dadurch gekennzeichnet, daß die Bosonen auf den niedrigsten Energieniveaus denselben Grundzustand teilen.

32. Verfahren nach Anspruch 27, dadurch gekennzeichnet, daß die Bosonen auf den niedrigsten Energieniveaus die Bose-Einstein-Kondensation zeigen.

33. Verfahren nach Anspruch 27, dadurch gekennzeichnet, daß m die Masse eines geladenen Bosons ist.

## Revendications

1. Procédé pour former un faisceau de bosons cohérents ayant une masse, le procédé comprenant :
produire un ensemble de bosons (21) ayant une masse ; et
diriger un faisceau lumineux de photons cohérents sur l'ensemble (21), caractérisé en ce que l'étape consistant à fournir l'ensemble (21) de bosons ayant une masse comprend ;
fournir un corps (21) de matière contenant des bosons ayant une masse ; et
maintenir le corps (21) dans des conditions auxquelles au moins certains des bosons ayant une masse sont dans leurs états de niveau d'énergie le plus faible ;
et en ce que l'étape consistant à diriger le faisceau de photons cohérents sur l'ensemble comprend de diriger le faisceau lumineux de photons cohérents sur le corps (21) de manière à provoquer une projection de bosons ayant une masse à partir du corps (21).

2. Procédé selon la revendication 1, caractérisé en ce que le corps (21) a une densité supérieure à une densité critique définie par les conditions auxquelles au moins certains des bosons ayant une masse sont dans les niveaux d'énergie les plus faibles.

3. Procédé selon la revendication 2, caractérisé en ce que le corps (21) est en deutérium solide à basse température.

4. Procédé selon la revendication 2, caractérisé en ce que la densité critique est de l'ordre de 10²²/cm³.

5. Procédé selon la revendication 1, caractérisé en ce que les bosons à leurs niveaux d'énergie les plus faibles dans le corps (21) partagent le même état fondamental.

6. Procédé selon la revendication 1, caractérisé en ce que les bosons à leurs niveaux d'énergie les plus faibles dans le corps (21) présentent une condensation de Bose-Einstein.

7. Appareil pour produire un faisceau de bosons cohérents ayant une masse, l'appareil comprenant :
des moyens (8, 29) pour retenir un ensemble (21) de bosons ayant une masse ; et
des moyens (5, 4) pour diriger un faisceau lumineux de photons cohérents sur l'ensemble (21)
caractérisé en ce que les moyens de rétention (8, 29) sont conçus pour retenir l'ensemble (21) sous la forme de matière dense ayant une relation entre densité et température ayant pour conséquence que certains bosons dans ladite matière restent à leurs niveaux d'énergie les plus faibles.

8. Appareil selon la revendication 7, caractérisé en ce que les moyens pour retenir une matière dense comprennent des moyens (8) pour retenir de l'hélium liquide.

9. Appareil selon la revendication 8, caractérisé par des moyens pour refroidir l'hélium à une très basse température.

10. Appareil selon la revendication 7, caractérisé en ce que la matière dense est telle que certains bosons en elle partagent le même état fondamental.

11. Appareil selon la revendication 7, caractérisé en ce que la matière dense est telle que certains bosons en elle présentent une condensation de Bose-Einstein.

12. Appareil selon la revendication 7 ou 10 ou 11, caractérisé par des moyens pour diriger le faisceau cohérent de bosons ayant une masse vers un matériau qui subit une fusion nucléaire quand il est irradié par ledit faisceau cohérent de bosons.

13. Procédé selon la revendication 1, caractérisé en ce que le corps (21) de matière est situé dans un cryostat (8) ayant en lui une fenêtre (15) ; et que l'étape consistant à diriger un faisceau lumineux de photons cohérents comprend de focaliser un faisceau laser à travers ladite fenêtre (15) sur une très petite surface de ladite matière ; et caractérisé par l'étape consistant à extraire dudit cryostat (8) ledit faisceau cohérent de bosons formé par ladite interaction de ladite lumière laser et de ladite matière.

14. Procédé selon la revendication 13, caractérisé par l'étape consistant à placer ladite matière dans une chambre sous vide (31) à l'intérieur dudit cryostat (8).

15. Procédé selon la revendication 14, caractérisé par l'étape consistant à relier un réservoir (1) de matière contenant des bosons aux moyens (29) pour fournir de la matière ayant des bosons, ledit réservoir (1) étant isolé (27) dudit faisceau laser pour éviter un chauffage par ledit faisceau laser.

16. Procédé selon la revendication 14, caractérisé par l'étape consistant à moduler par impulsions ledit faisceau laser sur ladite matière (21).

17. Procédé selon la revendication 13, caractérisé en ce que les moyens pour extraire ledit faisceau de bosons cohérents sont un système de transport sous vide (17) relié audit cryostat (8).

18. Procédé selon la revendication 13, caractérisé en ce que les bosons ayant les niveaux d'énergie les plus faibles partagent le même état fondamental.

19. Procédé selon la revendication 13, caractérisé en ce que les bosons ayant les niveaux d'énergie les plus faibles présentent une condensation de Bose-Einstein.

20. Procédé selon la revendication 1, caractérisé en ce que, par le mécanisme de diffusion provoquée, la lumière incidente amène lesdits bosons ayant les niveaux d'énergie les plus faibles à être rendus dans un état cohérent pour former ledit faisceau cohérent de bosons par un processus comprenant :
A + B → A + B
dans lequel A est un premier corps et B est un deuxième corps, ce qui donne ainsi un processus de deux corps vers deux corps sans amener aucun des atomes impliqués par ce processus en un état excité.

21. Procédé selon la revendication 1, caractérisé en ce que ledit ensemble est un ensemble d'atomes neutres, l'étape consistant à maintenir le corps (21) comprend de soumettre le corps (21) à des conditions de température et de pression telles que certains des bosons ayant une masse partagent le même état quantique et soient à une densité qui est cohérente ;
et que l'étape consistant à diriger un faisceau lumineux de photons cohérents comprend de braquer le faisceau de photons cohérents sur lesdits certains bosons pour former le faisceau cohérent de bosons ayant une masse.

22. Procédé selon la revendication 21, caractérisé en ce que ladite matière est de l'hélium liquide ayant des propriétés de superfluidité et que le faisceau de bosons est un faisceau de particules alpha.

23. Procédé selon la revendication 21, caractérisé en ce que la matière est liquide et qu'il y a une densité critique de la matière qui est de l'ordre de 10²²/cm³.

24. Procédé selon la revendication 21, caractérisé en ce que la matière est de l'hélium liquide ayant des propriétés de superfluidité et Que le faisceau de bosons est un faisceau d'hélium.

25. Procédé selon la revendication 1, caractérisé en ce que ledit ensemble est un ensemble d'atomes neutres, et ledit corps est soumis à des conditions de température et de pression telles que certains des bosons de ladite matière partagent des états quantiques proches ; et que l'étape consistant à diriger un faisceau lumineux de photons cohérents comprend de braquer le faisceau de photons cohérents sur lesdits certains bosons pour former le faisceau cohérent de bosons ayant une masse.

26. Procédé selon la revendication 25, caractérisé en ce que la matière est du deutérium, le deutérium est solide et a une densité critique.

27. Procédé selon la revendication 1, caractérisé en ce que
(i) la matière est de l'hélium ;
(ii) l'étape de maintien comprend d'isoler le corps (21) dans un environnement contrôlé (8),
et de créer une relation entre densité (n_{c}) et température (T_{c}) pour au moins certains des bosons d'hélium selon la formule${\text{n}}_{\text{c}} \text{= ∫} \frac{{\text{d}}^{\text{3}} \text{p}}{{\text{e}}^{\text{E/kT}} \text{c}}$
dans laquelle p = moment
E = énergie
k = constante de Boltzmann
ce qui donne n_{c} = (2mkT_{c})^{3/2} ζ (3/2)
dans lequel ζ (3/2) = 2,612 qui est la fonction de Riemann,
et m = masse du boson ; et
(iii) l'opération de diriger un faisceau lumineux de photons cohérents comprend de focaliser un faisceau de lumière cohérente d'une intensité suffisante sur le corps (21) pour provoquer une émission du faisceau cohérent de bosons ayant une masse le long de la direction du faisceau lumineux incident.

28. Procédé selon la revendication 27, caractérisé en ce Que la température entourant ledit corps (21) de bosons d'hélium est diminuée jusqu'à ce que n_{c} soit atteint.

29. Procédé selon la revendication 27, caractérisé en ce Que ledit faisceau lumineux est un faisceau laser.

30. Procédé selon la revendication 27, caractérisé en ce que n_{c} est la densité critique et T_{c} est la température critique pour une condensation de Bose-Einstein.

31. Procédé selon la revendication 27, caractérisé en ce que les bosons ayant les niveaux d'énergie les plus faibles partagent le même état fondamental.

32. Procédé selon la revendication 27, caractérisé en ce que les bosons ayant les niveaux d'énergie les plus faibles présentent une condensation de Bose-Einstein.

33. Procédé selon la revendication 27, caractérisé en ce que m = la masse d'un boson chargé.
